# EUROPEAN PATENT APPLICATION

(11) **EP 1 559 529 A2**
(43) Date of publication of application: **03.08.2005**
(21) Application number: 05250113.7
(22) Date of filing: 12.01.2005
(51) Int. Cl.: B29C 45/16, B29C 49/22, B65D 1/02

(54) **Preforms made of two or more materials and processes for obtaining them**

(30) Priority: 02.02.2004 EP 04250540; 06.10.2004 EP 04023789
(71) Applicant: The Procter & Gamble Company, Cincinnati, Ohio 45202 (US)
(72) Inventor: Hill, Simon David Julian, West Byfleet, Surrey, KT14 6PH (GB)
(74) Representative: L'Huillier, Florent Charles

(57) **Abstract**

Processes for obtaining new composite preforms (26) suitable for blow-molding made of at least two different materials (4, 22), preforms obtained thereby, and articles obtained by blow-molding of these preforms. The processes employ the injection-molding of two (or more) plastic materials to form preforms that can be blow-molded into articles. In a preferred embodiment, the two materials have different colors and the resulting articles show a multi-colored effect. The two materials are not laminated over each other.

## Description

### FIELD OF THE INVENTION

The present invention relates to an improvement in the injection blow-molding field, in particular to new preforms suitable for blow molding into bottles (and generally any hollow articles), to processes for the manufacture of these preforms and the articles obtained by blow-molding of these preforms. The processes of the invention employs two (or more) materials to form composite preforms. In a preferred embodiment, the two materials used have different colors and the resulting bottles show a multi-colored effect.

### BACKGROUND OF THE INVENTION

Injection blow-molding and its variant injection stretch blow-molding are commonly used to manufacture high quality hollow articles such as bottles on an industrial scale. In the first step of the process, a molten plastic material is injected into a mold cavity formed by an inner core rod and a preform mold to form a "test-tube" shaped intermediate, called a "preform". The preform mold is then opened and the molded preform subsequently blow-molded or stretch blow-molded.

In the injection blow-molding process, the core rod supporting the molded preform is immediately transferred to a bottle blow-mold having the shape of the desired hollow article. Air passing through a valve in the core rod inflates the hot preform, which expands and takes the form of the bottle blow-mold. After the desired bottle has sufficiently cooled to be handled, it is removed from the blow-mold and is ready for use (typically the part is allowed to cool for about 24 hours). More information on the injection blow-molding process can be obtained from general textbooks, for example "*The Wiley Encyclopedia of Packaging Technology*", Second Edition (1997), published by Wiley-Interscience Publication (in particular see page 87).

In the injection "stretch blow molding" process (sometimes known as biaxial-orientation blow-molding), the preform is carefully conditioned to a temperature warm enough to allow the preform to be inflated so that a biaxial molecular alignment in the sidewall of a blow-molded bottle is achieved. Relatively strong air pressure and, usually a stretch rod, are used to stretch the preform in the axial (vertical) direction. Unlike the bottles obtained by conventional injection blow-molding, the bottles obtained by stretch blow-molding are significantly longer than the preform. PET, PP and PEN (polyethylene naphtalate) are the choice material for the stretch blow-molding process. Different methods of injection stretch blow-molding exist, for example one step, two steps (also known as "reheat and blow"). More information on the injection stretch blow-molding processes can be obtained from general textbooks, for example "*The Wiley Encyclopedia of Packaging Technology*", Second Edition (1997), published by Wiley-Interscience Publication (in particular see pages 87 - 89).

Injection blow-molding is typically used to make relatively small shaped articles with precise neck finish and is commonly used to manufacture relatively high-value bottles for the cosmetic or pharmaceutical industry. Injection stretch blow-molding is typically used for the manufacture of larger articles such as drink containers for the soda industry, although this is not always true.

Unless otherwise explicitly stated, the term "injection blow-molding" is used hereinafter to designate both injection blow-molding and injection stretch blow-molding processes.

Extrusion blow-molding and injection blow-molding are different processes. In extrusion blow-molding, the molten plastic is extruded (typically continuously) to form an open-ended continuous tube. The extruded plastic is cut at regular intervals and the cuts are directly blow-molded to form an article. In the extrusion blow-molding process, the molten plastic material is not preformed around a core material to form a preform. The final shape of an article produced by extrusion blow-molding is less precise and less controllable than those obtained by injection blow-molding. Further details on extrusion blow-molding can be obtained in general packaging textbook, for example in "*The Wiley Encyclopedia of Packaging Technology*", referred to above, in particular pages 83-86. Extrusion blow-molding may be used to obtain laminated or co-extruded bottles with multiple layers for aesthetic or improved physical (barrier) properties.

Although conventional injection blow-molding provides good quality bottles with precise shapes, these bottles are usually made of a single material and only have one color (see for example US4,988,477 which discloses a method for producing an homogenously colored polyester container wherein a granular PET feed is mixed with a dyestuff composition).

Further decoration of the bottles by labeling, etching or engraving is not always possible for bottles with complex shapes and can be costly. It has been attempted in WO97/21539 to improve the appearance of injection blow-molded bottles by using two differently colored materials to manufacture the bottles. In WO97/21539, a process for injection molding of a multi-colored preform in an injection mold is disclosed wherein the differently colored materials are sequentially injected through a supply gate in a conventional injection mold cavity. According to WO97/21539, a layered distribution of the materials can be achieved by careful control of various operating parameters such as the quantity of materials injected, their rate of injections and the temperatures of injection. Controlling these parameters is however difficult and, as shown in Fig.8 of WO97/21539, the boundaries between the layers is imprecise and the process is not adapted to the manufacture of preforms having reproducible decorative features. Also this system only allows the formation of bottles with horizontal superposed layers of differently colored materials (taken the axis of the bottle as vertical axis).

US application number US2002/0058114A1 discloses a process for obtaining colored preforms with at least two colors. In this process, a base preform presenting a cylindrical recess is first formed by injecting a first material from an injection point at the bottom of the base preform. The base preform is transferred to a second mold and the recess is filled by injecting a second material from an injunction point, again at the bottom of the base preform. The process can be repeated to obtain multi-colored preforms. The preforms obtained by this process are made of laminated layers, which can limit the overall effect of the color difference especially when transparent or semi-transparent materials are used. Furthermore, the different colored materials are distributed as horizontally superposed layers, when taken the central axis of the preform as vertical axis. It would be desirable to have multi-colored preforms wherein the color distribution is not simply horizontal layers of materials.

EP1,180,424A1 discloses a process for producing bottles having a laminated peelable inner layer for specific applications such as the delivery of hair dyes.

It would be desirable to have a system permitting a more controlled distribution of the materials in the preforms. In particular, it would be desirable to obtain preforms wherein the distribution of the first and second materials is not laminated. A system allowing the inclusion of shapes other than horizontal layers of materials is also desirable.

### SUMMARY OF THE INVENTION

The present invention is directed to new preforms suitable for blow molding into bottles (and generally any hollow articles), to processes for the manufacture of these preforms and the articles (e.g. bottles) obtained by blow-molding of these preforms, all of which as defined in the claims.

In particular, the preferred process of manufacture comprises the successive steps of:
i. forming an incomplete preform by injection-molding of a first material in a first preform cavity, said first preform cavity being formed by the space between an inner core rod and a first preform mold, wherein said first preform cavity is adapted to leave at least one volume of the incomplete preform empty after the first material has been totally injected in said first preform cavity, said at least one empty volume being destined to be occupied by the second material,
ii. completing said incomplete preform by injection-molding of the second material to fill-in said at least one empty volume,
wherein the position of the empty volume in the incomplete preform is designed so that the first material and the second material are not laminated over each other.

Unlike the preforms of the prior art discussed above, the distribution of first and second materials in the preforms and bottles of the invention is not limited to horizontal superposed layers of said materials. For example, the second material may form at least one inclusion in a continuous matrix made of the first material.

The preforms may then be blow-molded by conventional blow-molding or stretch blow-molding techniques.

These and other features, aspects, and advantages of the present invention will become evident to those skilled in the art from a reading of the present disclosure.

### BRIEF DESCRIPTION OF THE DRAWINGS

While the specification concludes with claims which particularly point out and distinctly claim the invention, it is believed the present invention will be better understood from the following description of the preferred embodiments taken in conjunction with the accompanying drawings, in which like reference numerals identify identical elements and in which:
Fig. 1 is a schematic diagram illustrating an exemplary two injection steps process according to the present invention;
Fig. 2 is a schematic diagram illustrating the blow-molding (e.g. stretch blow-molding) of a preform obtainable by the process of Fig. 1 to make a bottle;
Fig. 3 is a schematic diagram of an exemplary four stage injection blow-molding process according to the present invention, wherein the injection and blow-molding stages are carried out on the same machine;
Fig. 4 is a schematic diagram of an alternative four stage injection blow-molding process further comprising a conditioning station followed by a stretch blow-molding station;
Figs. 5 to 13 each show two drawings: the drawing on the right hand side is an example of a preform made of two materials and obtainable by the processes according to the invention; the corresponding drawing on the left hand side is an example of bottle obtainable by blow-molding the preform of the right hand side in a suitable mold.
Fig. 14 is a schematic diagram of a 2 shots injection process that may be used to make a preform as shown on Fig. 10.
Fig. 15 is a cross-section of the first preform mold as shown on Fig. 14 with the first material (4) being completely injected in the first mold cavity.
Fig.16 is a cross-section of the second preform mold as shown on Fig. 14 with the second material completely injected in the second mold cavity.
Fig. 17 shows the incomplete preform obtained after the first injection step as shown on Fig. 14. The empty volume is clearly visible.
Fig. 18 shows the completed preform after the second injection step as shown on Fig. 14.

### DETAILED DESCRIPTION OF THE INVENTION

While the specification concludes with claims which particularly point out and distinctly claim the invention, it is believed the present invention will be better understood from the following description and examples, which further describe and demonstrate the preferred embodiments within the scope of the present invention. The examples are given solely for the purpose of illustration, and are not to be construed as limitations of the present invention since many variations thereof are possible without departing from its spirit and scope.

All cited references are incorporated herein by reference in their entireties. Citation of any reference is not an admission regarding any determination as to its availability as prior art to the claimed invention.

All percentages are by weight of total composition unless specifically stated otherwise. All ratios are weight ratios unless specifically stated otherwise.

Herein, "comprising" means that other steps and other ingredients can be added. This term encompasses the terms "consisting of" and "consisting essentially of".

The term "bottle" as used herein refers to any hollow article obtainable by blow-molding. The bottles of the present invention are preferably suitable for use as a container for any kind of matter, such as liquids, solids or semi-solids. The term bottle does not imply a particular intended use for the article. For example, the term "bottle" as used herein encompasses articles destined to contain cosmetic products (e.g. shampoos. creams, etc), edible products (e.g. milk, soft drink, condiments, etc), chemicals, etc...

The term "preform" as used herein refers to a "test-tube" shaped intermediate obtained by injection-molding of a plastic material between a core rod and a preform (mold cavity) and destined to be (stretch) blow-molded into a bottle. Usually the neck of the preform remains substantially unchanged during the blow-molding process while the body of the preform will expand considerably. Preforms are sometimes improperly called "parison", although this term should be reserved to the extruded tubular intermediates formed during an extrusion process. The cross-section of the preform may be cylindrical or non-cylindrical, for example oval, rounded squares/rectangles, triangle, asymmetric, etc... depending on the desired final bottle shape.

The terms "incomplete preform" as used herein designates a preform that is only partially formed and comprises empty volumes (e.g. holes or missing sections) that may be subsequently filled by at least one other material before the preform is blown into a bottle. The empty volumes in the incomplete preform extend, at least in some places, through the wall of the preform, i.e. from the outer surface to the inner surface of the incomplete preform. All the empty volumes are not required to extend through the whole thickness of the preform, although this is preferred.

The expression "the first material and second material are not laminated over each other" includes the situation wherein the first material is not entirely laminated over the second material, and reciprocally wherein the second material is not entirely laminated over the first material. Thus, contrary to as what is disclosed in US2002/0058114A1 and EP1,180,424A1, the second material does not form a laminated layer over the first material. Of course, the first and second materials may show some partial overlap in some places of the preform (for example there will be a small overall if both materials are injected at approximately the same injection point, and they may also be some overlaps at the boundaries between the two materials). Preferably, more than 50% of the surface of the second material is not laminated over the first material, and more preferably more than 90% of the surface of the second material is not laminated over the first material. Having the materials not laminated over each other gives more striking visual effects to the end products than the preforms of the prior art where the materials are laminated, especially when one of the material is transparent or semi-transparent.

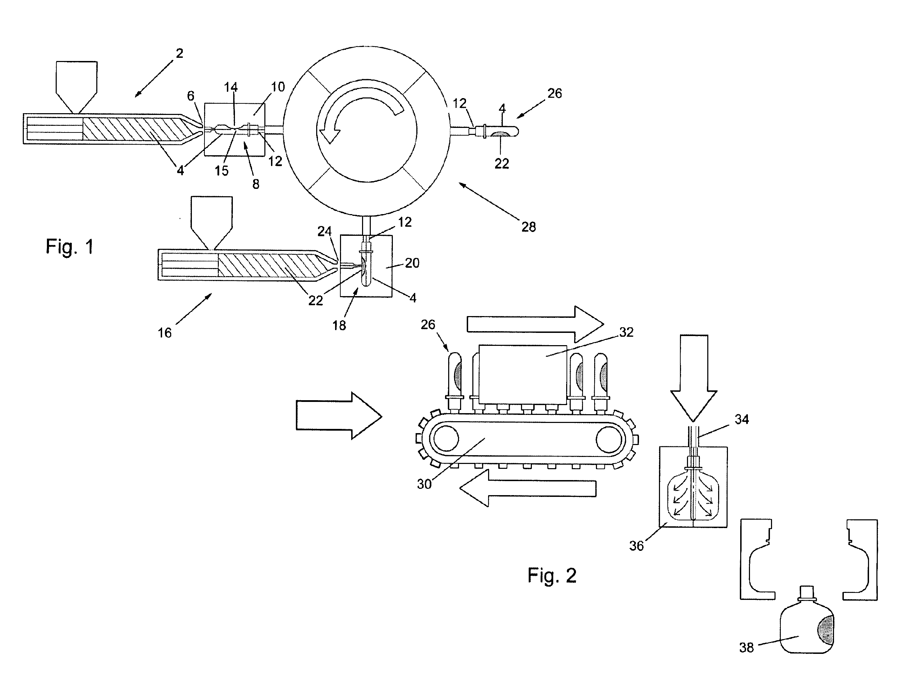

An embodiment of a process of the present invention will now be discussed with reference to Fig. 1. In this embodiment, the injections of the molten plastic materials to form the preform and the (stretch) blow-molding of the preform are carried out on separate machines.

In the first injection station (2), a first molten plastic material (4) is injected through an injection nozzle (6) in a first mold cavity (8). This mold cavity (8) is limited on the outside by a first preform mold (10) and on the inside by an inner cylindrical core rod (12) positioned centrally inside the preform mold. This first mold cavity is adapted to leave at least one volume (14) in the resulting preform (15) empty after the first material has been completely injected. This preform, comprising at least one empty volume, is designated herein as an "incomplete" preform (15).

Different solutions may be used to obtain a first mold cavity adapted to leave at least one volume (14) in the resulting preform empty after the first material has been completely injected. For example, as illustrated in Fig. 1, the inside of the first preform mold may comprise one (or more) protruding volumes of mold material (which may be stainless steel) that will leave by in-print one (or more) corresponding empty volume in the resulting, incomplete preform (15). Once the first plastic material has sufficiently cooled and solidified, the first preform mold may then be opened. The core rod and the incomplete preform (15) sitting on it may be rotated to the second injection station (16).

The second injection station (16) may comprise a second preform cavity (18) formed by the space between an inner core rod (12) and a second preform mold (20), said second preform cavity being adapted to allow the injection-molding of the second molten material to fill-in said at least one empty volume (14). After closure of the second preform mold (20), the second material (22) may be injected in a molten state through a different injection nozzle (24) into the empty volume(s) (14) to be filled in by the second material to (at least partially) complete the incomplete preform (15). Preferably, the respective temperatures of the first and second materials at the time of injection of the second material are conducive to effective bonding of the materials. This can be easily determined by simple iterative experimentation.

The point of injection for the first material and the second material may be the same or different. If both materials are injected at roughly the same point (for example the bottom of the preform) there will naturally be some overlap between the two materials near the injection point of the two materials. The injection point (or points if the second material is injected at more than one position) of the second material may also be different from the injection point of the first material. Having different injection points allows more sophisticated repartition of materials of the preforms, for example it is this possible to obtain inclusion of the second material in the lateral wall of the preform, as illustrated in Fig. 1.

In another embodiment (not illustrated), the first and second injection steps may be performed in the same preform mold, said preform mold comprising moving elements shutting-off the one or more empty volumes to be occupied by the second material during injection of the first molten material, said removable elements being then removed before step ii) so that said second molten material can be injected in the at least one empty volumes previously occupied by the removable elements. The first and second materials may then be injected through the same or through a different injection nozzle. Usually different injection nozzles will be used to allow greater flexibility in the design of the preform mold. It is also envisaged that the moving elements may be exchangeable, thus allowing various designs and shapes to be obtained with the same injection machine. It is also envisaged that non-moving, but exchangeable inserts may be used in the mold cavity of a machine to also increase the versatility of an injection machine.In the schematic diagram of Fig. 1, only one empty volume (14) is represented, but it is clear to the person skilled in the art that several empty volumes in the incomplete preform may be simultaneously filled in by the second material using an injection nozzle with multiple heads. Injection stations, optionally fitted with multi-headed injection nozzles, are commonly used in the injection-molding industry to form composite objects made of different plastic materials such as toothbrush handles or mobile phone bodies. These injection stations can be easily adapted for use in the present invention to serve as the first and/or second injection stations as described above.

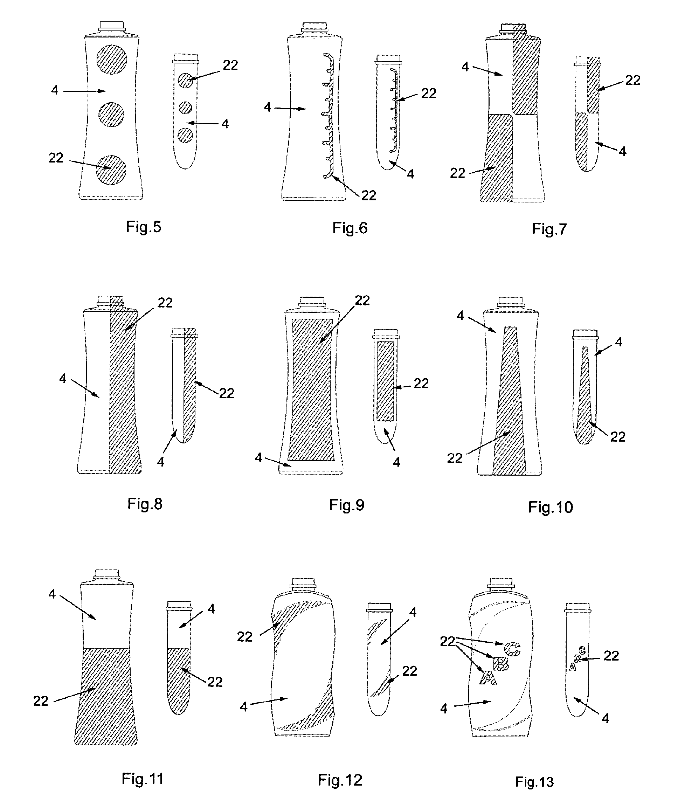

The second material (22) is different from the first material (4). By different, we mean that the first material composition is not exactly the same as the second material composition. In particular, it is preferred that the first and second material have a different visual appearance. For example, the first and second materials may contain different pigments, or one material may be untinted whilst the other material comprises a pigment. However, it is also preferred that the first and second materials have similar physical properties so that the second material "welds" properly to the first material when injected and that the preform is not prone to cracks when subsequently blown. Thus, the first and second materials are preferably of the same plastic type. Non limiting examples of usual thermoplastic material that can be used as first and second materials are: polyethylene terephtalate (PET), polypropylene (PP), polyethylene naphtalate (PEN), polyethylene terephtalate glycol (PETG), polyethylene (including low-density polyethylene, medium-density polyethylene and high-density polyethylene), ethylene propylene, copolymer resin, ethylene vinyl acetate copolymer resin, other polyolefin resins, polyamide resins, ionomer resins, ABS resins, polyvinylchloride, other synthetic resins, and copolymers thereof. Preferred materials are polyethylene terephtalate (PET), polypropylene (PP), polyethylene naphtalate (PEN), polyethylene terephtalate glycol (PETG), low density polyethylene (LDPE), linear low density polyethylene (LLDPE), high density polyethylene (HDPE), and mixtures thereof. Even more preferred polymers, particularly when the preform is stretch blow-molded, are polyethylene terephtalate (PET), polypropylene (PP), polyethylene terephtalate glycol (PETG), and polyethylene naphtalate (PEN). When different types of plastic material are used, these are preferably as compatible as possible. GB2,191,145, Fig. 7 provides a compatibility table for common plastic materials in an extrusion (not injection) context. However it is believed that this table may be useful to select materials in the present invention. PETG was found to provide excellent results in terms of strength of the welding line (the boundaries between the materials).

The preform may be totally completed after injection of the second material, but it is also envisaged that the preform may only be partially completed after the injection of the second material, for example in embodiments wherein a third or more materials are further injected in the remaining empty volumes.

Back to the embodiment of Fig. 1, after the second material has been injected and the preform completed, the second preform mold (20) is opened and the core rod (12), on which the completed preform (26) sits, is rotated to a removing section (28) where the completed preform is safely removed from the core rod (12). The core rod may be rotated back to the first preform mold to start a new cycle.

The completed preform can now be (stretch) blow-molded to form a bottle. Naturally, the completed preforms can be (stretch) blow-molded in the same manufacturing site or can be stored and subsequently transported in bulk to a specialized blow-molding site. A standard stretch blow molding process for normal preform may be used. For example, as shown on Fig. 2, the completed preforms (26) may be placed on a preform conveyor (30) and reheated by a heating unit (32) to make them more stretchable, then placed on a conventional stretch rod (34) in a blow-mold cavity (36). The simultaneous actions of compressed air (or another gas) passed through valves in the stretch rod to inflate and of the stretch rod (34) itself stretch the preform body inside the preform mold. The blow-mold is then opened and the finished bottle (38) ejected. A standard non-stretch blow-molding process may also be used.

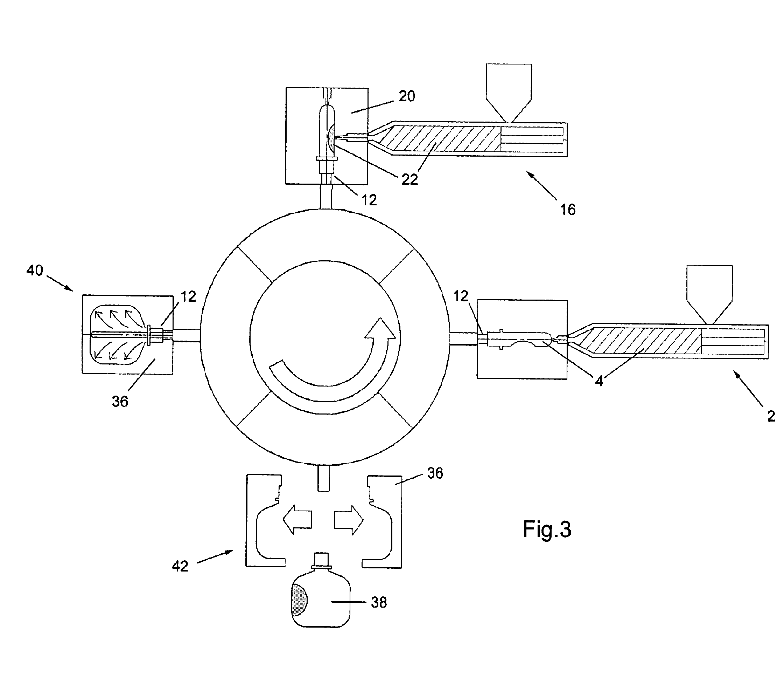

Fig. 3 illustrates a four stages process that is similar but more automatic than the process described in Figs. 1-2. In this process, the first injection and second injection stages may be carried out in a similar manner as discussed in Fig. 1 with similar injection stations (2, 16). The completed preform (26), whilst sitting on the core rod, may then be directly rotated to a blow-mold station (40) after the second injection station. Compressed air or another gas may then be passed through one or more valves in the core rod (12) to inflate the preform body so that it takes the shape of the blow mold (36). Alternatively, at this stage, the core rod (12) may also be retracted and a stretch rod adapted to stretch blow-molding inserted in the preform through its neck.

The blow-mold may then be opened and the finished bottle (38) ejected in an ejection station (42). The core rod may then be rotated back to the first injection station (2) and a new cycle can begin. Of course, the machine may comprise up to four core rods so that the injection steps, the blow step and the ejection step may take place simultaneously with different preforms/bottles.

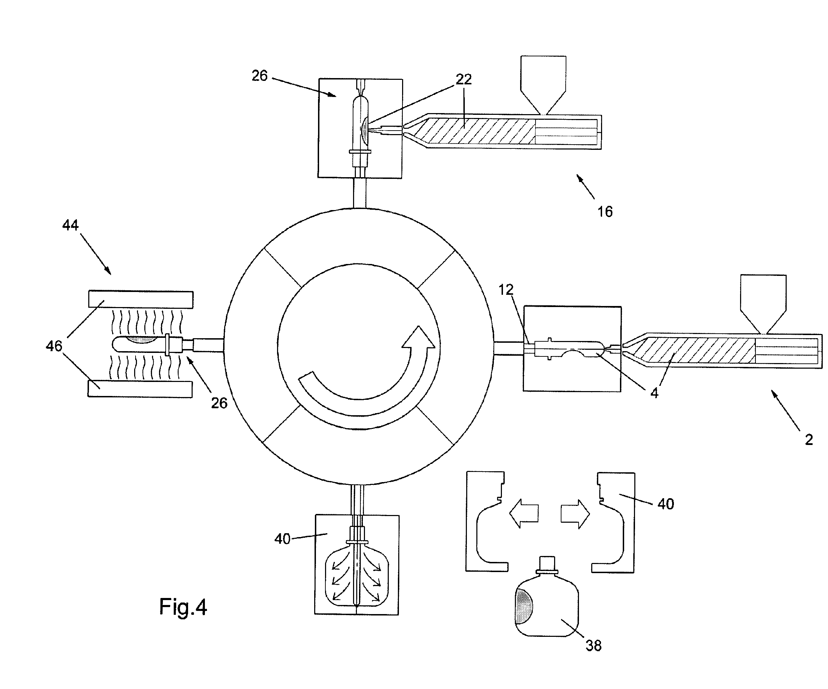

Fig. 4 is another example of a four stage process illustrating the present invention. In this process, the completed preform (26) obtained after the second injection station (16) is rotated to a conditioning station (44) comprising heaters (46) where the completed preform is re-heated prior to the blow-molding stage in a blow-molding and ejection station (48). The finished bottle (38) is finally ejected from the blow-mold (40).

The processes of Figs. 3 and 4 are advantageous because the preforms are immediately transformed into finished products. However the machines used for these processes are more complex than the machines that may be used for a 2-steps process such as illustrated in Figs. 1-2, where the injection and blow-molding stages are carried out on different machines.

Although the embodiments of the invention herein illustrated describe processes and preforms made of two materials, combinations of three or more materials are also envisaged within the scope of the present invention. For example a third or more injection station may be added to the processes disclosed herein.

The distribution of the first and second materials in the completed preforms may be well controlled by the shape of the preform molds used, and the preforms obtained may be reproduced with great consistency. Furthermore, the boundaries between the first and second materials are precise. This result was not obtainable by the process disclosed in prior art document WO97/21539, and the preforms obtainable according to the processes claimed are new.

Other processes than the preferred processes described above may be used to obtain these new preforms. For example, a conventional complete (fully formed) preform made of a single first material may be formed by conventional means. One or more selected volume of this preform may then be milled out of the preform to form an incomplete preform and this incomplete preform may then be completed by injection-molding of the second material in the empty volume(s), using the same or a different injection-mold.

If the incomplete preform is returned to the first mold for further injection, this avoids the need for two injection molding stations. The second material may be injected from the same nozzle as the first material if the desired distribution of the first and second materials allows (this would be the case for the preforms of Figs. 7, 8, 10 and 13 for example), or from a second nozzle, which may be situated at any position relative to the preform. Using a second nozzle may increase the cost of the machine but enables a larger choice of distribution of the first material into the second material, in particular to obtain inclusions on the side walls of the bottles such as shown on Figs. 5, 6, 9, 12 and 13. Using a second mold for the injection of the second material is also possible.

According to the present invention, the first and second materials may be distributed in various shapes and forms relative to each other, as illustrated on Figs. 5 to 13. For example, the shapes that the second material may take include squares, rectangles, rectangles with round corners, circles or ovals, letters, words, etc.
Fig. 5 shows an example of a bottle having multiple inclusions of the second material in a continuous matrix (4) made of a first material (22).
In Fig. 6, graduations are formed by the second material, facilitating a more exact reading of the proportion of content left in the bottle if the second material (22) is transparent.
Fig. 7 shows an example of preform and bottle wherein the second material extends into the neck region.
Fig. 8 may be used to decorate and communicate a dual chamber bottle, or could be used to differentiate between the front and back of the bottle.
Fig. 9 shows a bottle with a broad colour panel that could be used to frame a label.
Fig. 10 shows a bottle with a stripe of colour that could be shown to help distinguish between variants in a brand, e.g. shampoo fragrances.
Fig. 11 shows a bottle having its upper portion coloured. Bottles are usually filled with headroom tolerance to allow for overfill or expansion of the product. One issue with transparent bottle is that the customer may interpret this as an 'under-filled' bottle. The bottle of Fig. 11 avoids this issue.
Fig. 12 shows a curved bottle wherein the second material is distributed in areas of the bottle where it would be difficult to apply a label using standard means.
Fig. 13 illustrates how the preform and bottle may show letters or logo.

The processes according to the invention are adapted to produce preforms and bottles made of two materials or more, wherein said materials have a precise and reproducible distribution in the bottle. Starting with the design of the desired bottle, the required preform and blow-mold can be designed using computer simulations, e.g. with Finite Element Analysis (FEA) tools. The bottles shown on Fig. 5 - 13 illustrate the type of results that may be obtained by blowing the preforms shown on the right hand side.

The first and second materials may or may not be distributed in superposed horizontal layers. Possible distribution of the first and second materials includes, but is not limited to, cases wherein:
- the second material (22) forms at least one, preferably two discrete (unconnected), inclusion(s) in a continuous matrix made of the first material (as exemplarily illustrated in Figs. 5, 7, 12 and 13);
- the second material is not connected to the neck or the bottom of the bottle (as exemplarily illustrated in Figs. 5, 6, 9, 10, 11, 12 and 13);
- the first or second material or both have a distribution extending from the neck (50) of the bottle to its bottom (52), as exemplarily illustrated on Fig. 8;
- the first and/or second material form vertical or horizontal regions or layers comprising the first and the second materials respectively (as exemplarily illustrated on Figs. 8 and 11).

In addition to their decorative functions, the composite preforms and bottles may even have additional functions: for example, if the first material (4) is opaque while the second material (22) is transparent, the user may be able to look through the second material to see how much of the content is left in the bottle without opening it.

The bottles according to the invention may also be useful as anti-counterfeiting measures against rogue traders. Counterfeiting of high value goods such as cosmetics is a growing problem and counterfeiters would find it more difficult to copy a bottle with two built-in materials of different colors. If it is preferred that the bottle has only one overall color, another possibility is to use a first and a second materials having the same color in normal conditions, but add a UV reactive agent in one of the material. The UV reactive agent glows when illuminated by a proper UV lamp, which could be a hand-held detector, similarly to what is used for detecting counterfeit bank notes. This would ease counterfeit controls in places such as customs or marketplaces.

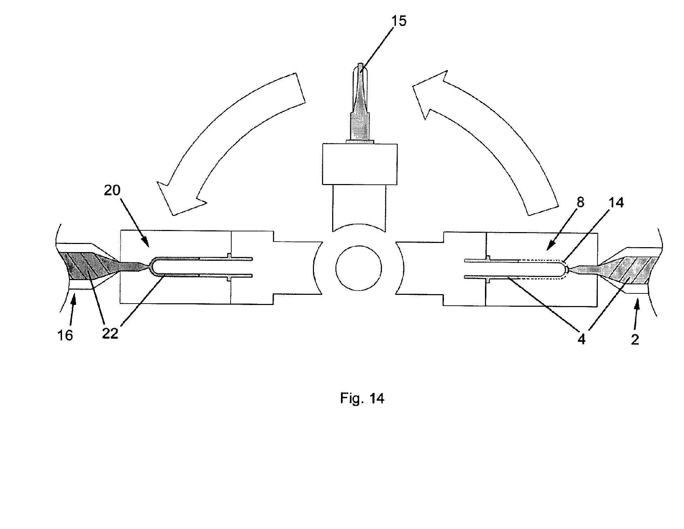

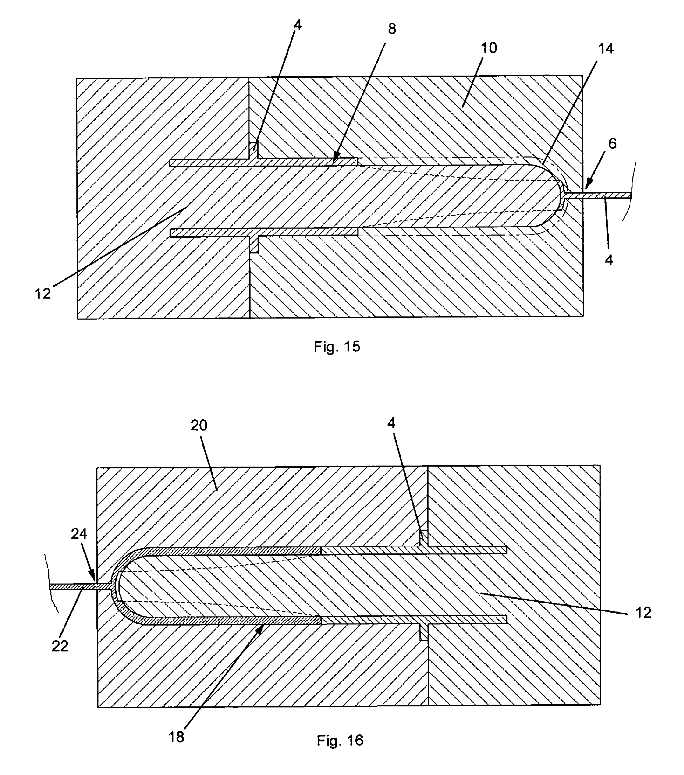

Fig. 14 shows a schematic diagram of a two shots injection process that illustrates one way to manufacture a preform similar to the preform of Fig. 10. In this process, an incomplete preform (14) is first formed in the first injection station (2) by the injection of the first material (4) in a specially designed first mold cavity (8). The first mold cavity is designed to leave one empty volume (14), which will be filled by the second material in a further step. After the first material has been injected, the incomplete preform obtained is rotated to the second injection station (16) where the second material (22) is injected to fill the empty volume (14) and complete the preform. Figs. 15 - 18 illustrate this process in greater details.

Fig. 15 is a cross-section of the first mold with the first material (4) being completely injected in the first mold cavity (8).

Fig. 16 is a cross-section of the second mold (20) with the second material (22) completely injected in the second mold cavity (18). The first material and the second material overlap slightly near the injection point where the materials have been injected.

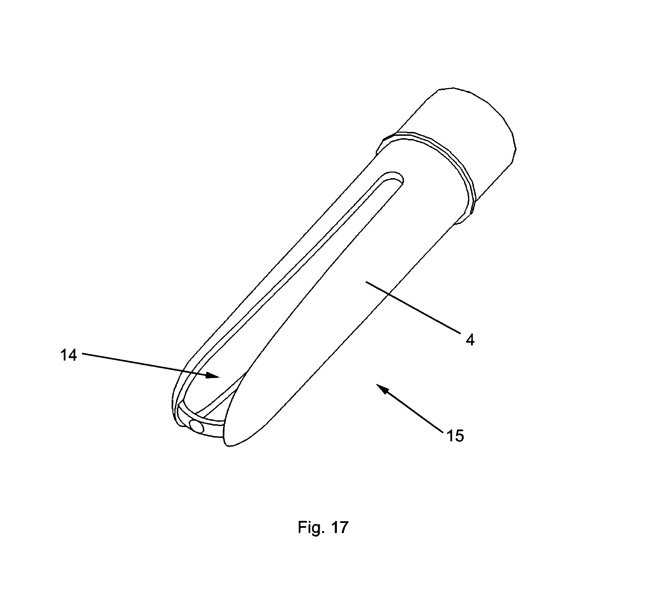

Fig. 17 shows the incomplete preform obtained after the first injection step. The empty volume (14) destined to be filled by the second material is clearly visible.

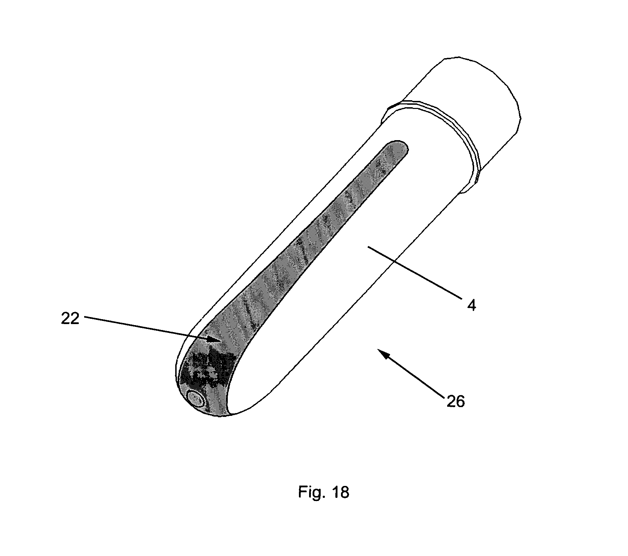

Fig. 18 shows the completed preform after the second injection step where the second material (22) has completed the preform. The completed preform (26) is ready for blow-molding.

## Claims

1. A process for manufacturing a preform (26) suitable for blow-molding into a bottle, said preform being made of at least two different materials (4, 22), said process comprising the steps of:
i) forming an incomplete preform (15) by injection-molding of a first material (4) in a first preform cavity (8), said first preform cavity being formed by the space between an inner core rod (12) and a first preform mold (10), wherein said first preform cavity (8) is adapted to leave at least one empty volume (14) in the incomplete preform (15) after the first material (4) has been totally injected in said first preform cavity (8), said at least one empty volume (14) being destined to be occupied by a second material (22),
ii) at least partially completing said incomplete preform (15) by injection-molding of the second material (22) to at least partially fill-in said at least one empty volume (14),
**characterized in that** the position of the empty volume (14) in the incomplete preform (15) is such that the first material (4) and the second material (22) are not laminated over each other.

2. A process according to claim 1, wherein after the injection of the first material (4) in step i), the incomplete preform (15) is transferred to a second preform cavity (18) formed by the space between an inner core rod (12) and a second preform mold (20), said second preform cavity (18) being adapted to allow the injection-molding of a second material (22) to fill-in said at least one empty volume (14).

3. A process according to claim 2 wherein the first preform mold (10) is opened after step i), the core rod (12) and the incomplete preform (15) sitting on it being subsequently transferred to the second preform mold (20), and the second preform mold (20) being then closed before performing step ii).

4. A process according to claim 1 wherein steps i) and ii) are successively carried out in the same pre-form mold, said first pre-form comprising at least one removable element shutting-off the at least one empty volume to be occupied by the second material during injection of the first molten material, said at least one removable element being removed before step ii) so that said second molten material can be injected in the at least one empty volume previously occupied by the at least one removable element.

5. A process according to any of the preceding claims where the first material and the second material are injected from different injection points.

6. A process for manufacturing a preform (26) suitable for blow-molding into a bottle, said preform being made of at least two different materials, said process comprising the steps of:
i) forming a complete preform made of a first material,
ii) milling out at least one volume of said complete preform to form an incomplete preform,
iii)injecting a second material in said at least one empty volume to complete the preform.

7. A preform suitable for blow-molding into a bottle, said preform being made of at least two different materials (4, 22), **characterized in that** said first material and said second material are not laminated over each other.

8. A preform according to claim 7 wherein the first material and second material are not distributed as horizontally superposed layers, taken the central axis of the preform as vertical axis.

9. A preform according to claim 8 wherein the second material (22) forms at least one inclusion in a continuous matrix made of the first material (4), preferably wherein the first material forms at least two discrete inclusions.

10. A preform according to any of claims 7 to 9, wherein there is no second material (22) in the neck (50) or the bottom (52) of the preform.

11. A preform according to claim 7 wherein the first (4) and/or second material (22) extends from the neck (50) of the preform to its bottom (52).

12. A process for obtaining a bottle (38), said bottle being made of at least two different materials (4, 22), said process comprising the steps of:
a) obtaining a preform (26) suitable for blow-molding into a bottle by the process of any of claims 1 to 5, and
b) blow-molding the preform to obtain the bottle (38), preferably stretch blow-molding the preform.

13. A process according to claim 12 wherein the preform is removed from the inner core rod and optionally stored before it is blow-molded.

14. A process according to claim 12 wherein the inner core rod (12) and the preform (26) sitting on it are transferred to a blow-molding cavity between step a) and b).

15. A process or preform or bottle according to any of the preceding claims wherein the first and second materials have a different visual appearance, preferably where the first and second materials are differently colored.
